# EUROPÄISCHE PATENTSCHRIFT

(11) **EP 3 001 843 B1**
(45) Veröffentlichungstag und Bekanntmachung des Hinweises auf die Patenterteilung: **19.04.2017**
(21) Anmeldenummer: 15747362.0
(22) Anmeldetag: 03.06.2015
(51) Int. Cl.: C12C 3/04, C12C 3/12

(54) **VERFAHREN ZUM BEHANDELN EINES HOPFENPRODUKTES UND VERWENDUNG EINES HOPFENPRODUKTES**
METHOD FOR TREATMENT OF A HOPS PRODUCT, AND USE OF A HOPS PRODUCT
PROCÉDÉ DE TRAITEMENT D'UN PRODUIT À BASE DE HOUBLON ET UTILISATION D'UN PRODUIT À BASE DE HOUBLON

(30) Priorität: 24.06.2014 DE 102014009010; 10.11.2014 DE 102014016507; 10.11.2014 US 201462077600 P
(43) Veröffentlichungstag der Anmeldung: 06.04.2016
(73) Patentinhaber: Schmailzl, Martin, 85088 Vohburg (DE)
(72) Erfinder: SCHMAILZI, Martin, 85088 Vohburg (DE)
(74) Vertreter: Castell, Klaus
(86) Internationale Anmeldenummer: PCT/DE2015/000266
(87) Internationale Veröffentlichungsnummer: WO 2015/197040

(56) Entgegenhaltungen:
- DE-A1- 1 642 588
- DE-A1- 19 905 426
- DE-C- 6 822
- SU-A1- 437 804
- SU-A1- 1 158 572

## Beschreibung

Die Erfindung betrifft ein Verfahren zum Behandeln eines Hopfenproduktes, das eine Feuchte von mehr als 18 % GG Wassergehalt aufweist.

Nach Jakob Münsterer, LfL-Information, Optimale Trocknung und Konditionierung von Hopfen, Bayerische Landesanstalt für Landwirtschaft, Freising-Weihenstephan, 2006 hat Hopfen bei der Ernte einen Wassergehalt von 84 - 78 %. Andere Quellen sprechen von einem Wassergehalt von 70 % oder 80 bis 85 %. Dieser frisch geerntete Hopfen wird in der Regel auf 9 bis 10 % Wassergehalt getrocknet, um lagerfähig zu sein. Über Förderbänder wird dazu der Grünhopfen in 14 bis 15 m hohe Hopfendarren transportiert und bei einer Temperatur von 62 bis 65 °C in einer Zeit von etwa 6 Stunden getrocknet. Der optimale Wassergehalt des Hopfens frisch aus der Darre liegt zwischen 9 und 10 %. Durch Belüftung mit Umluft werden die unterschiedlichen Wassergehalte des inhomogenen Hopfens ausgeglichen und es erfolgt sogleich ein Feuchteausgleich zwischen Doldenspindel und Doldenblättern. Ziel sollte es sein, den Hopfen so zu trocknen, dass bereits nach der Belüftung mit Umluft der gewünschte Wassergehalt erreicht wird. Danach wird der Hopfen mehrere Tage gelagert.

Jakob Münsterer weist darauf hin, dass die Dolde bei der Lagerung im Grünhopfenvorratsbehälter, bei der Trocknung und bei der Konditionierung nicht zu lange einer höheren Umgebungsfeuchte von über 70 % r. F. ausgesetzt werden darf, die von den Dolden nicht abgeführt oder aufgenommen werden kann, da sonst die äußere Qualität wie Farbe und Glanz sehr schnell negativ beeinträchtigt werden.

Zur Lagerung wird ein gut belüftetes Grünhopfensilo vorgeschlagen, da sonst Kondensatwasserbildung die äußere Qualität wie Farbe und Glanz negativ beeinträchtigen. Wenn das Wasser wegen kühleren Temperaturen nicht mehr ausreichend von der Spindel abgeführt werden kann und gleichzeitig die Spindelfeuchte über eine längere Zeit bei einem Wassergehalt von über 15 % verbleibt, kommt es sehr schnell zu mikrobiologischen Prozessen und enzymatischen Verderbsreaktionen mit der Folge von Erwärmung. Bereits kleinere feuchte Bereiche in einem Hopfenballen können zum Verbrennen des Hopfen führen und sogar den Hopfen entflammen.

Solange Hopfen noch als Grünhopfen vorliegt und zumindest die Feuchte im Bereich der Spindel bei einem Wassergehalt von über 15 % liegt, muss der Hopfen immer gut belüftet werden, da er sonst verdirbt.

Der Hopfen sollte daher direkt nach dem Pflücken auf etwa 10 % Wassergehalt heruntergetrocknet werden, um nicht zu verderben.

Als Alternative zu den Hopfendarren werden auch Bandtrockner eingesetzt.

In der DE OS 1 442 181 wird vorgeschlagen, grüne Hopfendolden durch auspressen von Feuchtigkeit zu befreien und mit Konservierungsmitteln zu behandeln. Eine Behandlung von ausgepresstem Hopfen mit Hitze, wie in der Offenlegungsschrift vorgeschlagen, würde die Produktqualität beeinträchtigen. Chemische Konservierungsmittel wie Schwefel sind aus gesundheitlichen Gesichtspunkten zu vermeiden und ein Haltbarmachen mittels Vakuum entzieht dem Hopfen einen großen Anteil der Aromen.

Die DE OS 1 442 180 schlägt als Alternative zur künstlichen Trocknung und Schwefelung vor, grüne Hopfendolden mechanisch zu zerkleinern und durch Erhitzen oder Konservierungsmittel haltbar zu machen. Dabei werden unangenehme aromatische Bestandteile im zerkleinerten grünen Hopfen durch Erhitzen oder Evakuieren des zerkleinerten Hopfens weitgehend entfernt. Es wird somit darauf geachtet, dass der Hopfen auch während des Erhitzens belüftet bleibt, um unangenehme Aromen auszutreiben. Das vorgeschlagene Verfahren zur Sterilisierung hat sich in der Praxis aber nicht etablieren können.

Die DD PS 148 643 schlägt als Alternative zu den zuvor genannten Verfahren vor, die fischen grünen Hopfendolden mit ihrem natürlichen Wassergehalt unmittelbar nach der Pflücke auf ökonomisch günstige Weise zu zerkleinern, zu portionieren, zu kompaktiern und tiefzukühlen.

Die beschriebenen Alternativen zum Trocknen der Hopfendolden haben sich wirtschaftlich nicht etablieren können, da Konservierungsstoffe abgelehnt werden und ein Austreiben von Aromen durch Erhitzung oder Vakuum zu einer schwer kontrollierbaren Veränderung des Hopfenproduktes führen.

Daher wird Grünhopfen zum Bierbrauen in der Jahreszeit der Hopfenernte eingesetzt und der meiste Hopfen wird auf unterschiedliche Art und Weise getrocknet. Der Hopfen kann dann als getrockneter Hopfen für den Brauprozess verwendet werden oder er wird zu Pellets gepresst, die auch zu Hopfenextrakt weiterverarbeitet werden können.

Die DE 10 2009 031 942 A1 beschreibt, dass beim Bierbrauen Hopfenprodukte wie Hopfenpellets, Hopfenpulver oder Hopfenextrakte der Würze zugegeben werden, deren Bitterstoffe bei den hohen Temperaturen der Würzekochung in ihre isomerisierte Form überführt werden, wodurch sie in ihrer Bitterkeit stark zunehmen. Bitterstoffe, die nicht gelöst und/oder nicht isomerisiert wurden, seien für das Bier verloren. Sie werden mit dem Heiß- und Kühltrub wieder ausgeschieden, während gelöste, unisomerisierte Bitterstoffe auf Grund ihrer geringen Löslichkeit bei niedrigen pH-Werten während der Gärung wieder nahezu vollständig ausfallen. Daher wird vorgeschlagen, in einem ersten Brauprozess Hopfenpellets, Hopfenpulver oder Hopfenextrakte einzusetzen und den Braurückstand mit den isomerisierten Hopfenprodukten des ersten Brauprozesses für einen zweiten Brauprozess zu verwenden.

Aus der DE 37 79 788 T2 ist bekannt, Hopfen in einem abgeschlossenen Gefäß unter Druck zu erhitzen und anschließend zu entspannen. Dieses Hopfenprodukt wird nach der Druckentlastung verpackt. Für dieses Verfahren werden aber dem Hopfen Salze zugegeben und es entstehen Temperaturen von 120 bis 160 °C, wodurch die Natürlichkeit des Hopfens beeinträchtigt wird und Hopfenöle verloren gehen.

Die SU 437 804 A1 beschreibt ein Verfahren zum Behandeln von Hopfen, bei dem der Hopfen sterilisiert und in einer luftdichten Verpackung gelagert wird. Der Hopfen wird pulverisiert, 30 min im Wasserbad pasteurisiert und danach hermetisch abgedichtet und dann 1 bis 2 Jahre bei 15 bis 20 °C gelagert bevor er zum Hopfen der Würze verwendet wird. Beim Pulverisieren wird der Wassergehalt aber unter eine Feuchte von 18 % GG und zumindest unter 60 % GG Wassergehalt abgesenkt und die Gefäße werden erst nach der Sterilisation verschlossen. Dadurch werden zunächst beim Pasteurisieren unerwünschte Hopfenöle ausgetrieben und dann entsteht beim Pasteurisieren ein trockenes gut lagerbares Pulver, das mindestens ein Jahr lang verschlossen aufgehoben wird.

Die SU 1 158 572 A1 beschreibt ein Verfahren zum Konservieren von Grünhopfen, bei dem der Grünhopfen in einem Verhältnis 1:1 mit kochender Molasse gemischt wird. Der Osmotische Druck des Zuckers führt dabei zu einer Sterilisierung. Auch bei diesem Verfahren wird somit offen sterilisiert und anschließend in einem geschlossenen Behältnis gelagert.

Der Erfindung liegt die Aufgabe zu Grunde, ein gattungsgemäßes Verfahren weiter zu entwickeln, um ein haltbares Hopfenprodukt mit dem typischen Grünhopfenaroma zur Verfügung zu stellen.

Diese Aufgabe wird dadurch gelöst, dass das Hopfenprodukt als ungetrockneter, erntefrischer Grünhopfen in einem luftdichten Behältnis sterilisiert und in einer luftdichten Verpackung gelagert wird.

Während im Stand der Technik Grünhopfen immer im gutbelüfteten Zustand verarbeitet wird, um unangenehme aromatische Bestandteile zu entfernen und um mikrobiologische Prozesse und enzymatische Verderbsreaktionen zu vermeiden, wird erfindungsgemäß vorgeschlagen, das Hopfenprodukt in einem luftdichten Behältnis zu sterilisieren.

Der Erfindung liegt die Erkenntnis zu Grunde, dass nach dem Befüllen eines luftdichten Behältnisses mit dem Hopfenprodukt das Hopfenprodukt sehr schnell sterilisiert werden kann und daher Verderbsreaktionen vermieden werden können. Ein Verdampfen von Hopfenölen wird dabei vollständig vermieden und es kann gleichzeitig ein Sauerstoffkontakt auf einfache Art und Weise vermieden werden. Auch die Entfernung unangenehmer aromatischer Bestandteile im zerkleinerten grünen Hopfen durch Erhitzen oder Evakuieren, wie in DE OS 1 442 181 vorgeschlagen, hat sich als nicht notwendig herausgestellt.

Auch die DE 10 2009 031 942 A1 schlägt vor, die Hopfenprodukte heiß zu halten und offen zu sieden. Dabei verdampfen bestimmte Öle, die für den Brauprozess nachteilig seien. Dies hat sich jedoch für überflüssig erwiesen und erfindungsgemäß wird der Hopfen im eigenen Saft, d.h. mit seiner eigenen Restfeuchte sterilisiert. Eine Zugabe von Wasser erfolgt nicht, um zuvor entfernte Feuchtigkeit wieder zuzuführen sondern um die Alpha Ölmenge und den pH-Wert zu standardisieren.

Der Erfindung liegt die Erkenntnis zu Grunde, dass der Erhalt des Grünhopfenaromas derart gesteuert werden kann, dass die starke Intensität der Bittere des Grünhopfens erhalten werden kann. Dadurch wird weniger Hopfen benötigt und es können über die Zeit und die Temperatur der Wärmebehandlung verschiedene Aromen verstärkt werden. Beispielsweise führt eine Konservierung bei 60 °C über 60 min zu einem Aroma von fruchtiger Johannisbeere, eine Konservierung bei 90 °C über 30 min verstärkt das typische Hopfenaroma, 90 °C über 60 min führt zu einem sehr frischen, intensiv hopfigen Aroma, 60 °C über 30 min verstärkt Grapefruitnoten, 100 °C über 30 min forciert das Grünhopfenaroma und 90 °C über 90 min führt zu einem an grüne Oliven erinnernden Aroma. Somit kann durch die Wahl der Temperatur und der Behandlungszeit gezielt ein besonderes Aroma verstärkt oder generiert werden. Das Verfahren dient somit nicht nur der Sterilisierung sondern es kann auch kumulativ oder alternativ zur gezielten Beeinflussung des Hopfenaromas verwendet werden. Erfreulich ist dabei, dass sämtliche Pflanzeninhaltsstoffe erhalten bleiben und das Aroma durch den Sterilisierungsprozess beeinflusst werden kann.

Alternativ oder kumulativ kann das Hopfenprodukt auch beispielsweise mit Velcorin oder Gammastrahlung kaltentkeimt werden. Weiterhin werden für die Sterilisierung Ohmic-heating, Direktdampfinjektion, eine Durchlaufpasteurisierung oder eine Behandlung im Autoklav vorgeschlagen. Dies ist insbesondere dann von Vorteil, wenn wegen einer bestimmten Aromabeeinflussung die verwendeten Temperaturen und Zeiten für die gewünschte Sterilisierung nicht ausreichen.

Mit der Dampfinjektion können auch gezielt Frischhopfenaromen ausgetrieben werden, um ein bekanntes Pellet-Aroma zu erzielen.

Vorteilhaft ist es, wenn das Hopfenprodukt direkt nach der Ernte noch am selben oder am darauf folgenden Tag und spätestens eine Woche nach der Ernte im luftdichten Behältnis sterilisiert wird. Dadurch wird verhindert, dass das Hopfenprodukt zwischen Ernte und Sterilisierung durch mikrobiologische Prozesse und enzymatische Verderbsreaktionen beeinträchtigt wird.

Das erfindungsgemäße Sterilisierverfahren eignet sich besonders für Grünhopfen, der somit direkt nach der Ernte sterilisiert werden kann und dann längere Zeit für den Einsatz beispielsweise beim Bierbrauen zur Verfügung steht.

Auch eine Optimierung der Trocknungsverfahren hat nicht vermeiden können, dass während der Hopfentrocknung ein großer Anteil an Bitterstoffen und an Aromastoffen verlorengeht. Das der Erfindung zu Grunde liegende Sterilisierverfahren führt dazu, dass im Wesentlichen alle Bitter- und Aromastoffe des Hopfens erhalten bleiben und dadurch weniger Hopfenprodukte beim Bierbrauen benötigt werden. Außerdem können Hopfenaromen beim Bierbrauen zum Einsatz kommen, die getrockneter Hopfen nicht mehr aufweist.

Eine vorteilhafte Ausführungsvariante des Verfahrens sieht vor, dass das Hopfenprodukt Hopfendolden sind. Die Hopfendolden können dadurch in ihrer Doldenform auch als sterilisiertes Produkt zur Verfügung gestellt werden. Das zur Verfügung stellen von sterilisierten Hopfendolden erschließt neue Anwendungsgebiete, bei denen ganzjährig naturbelassene Hopfendolden benötigt werden.

Alternativ wird vorgeschlagen, dass das Hopfenprodukt zerkleinerte Hopfendolden sind. Hierzu können die Hopfendolden beispielsweise in einer Mühle oder einem Fleischwolf zerkleinert werden, so dass ein frisches Hopfen-Mus für die Sterilisierung zur Verfügung steht. Dabei kann der Hopfen auch derart zerkleinert werden, dass er nach dem Kochen der Würze in einem Whirlpool von der Würze getrennt werden kann.

Sowohl bei der Verarbeitung von Hopfendolden als auch von zerkleinerten Hopfendolden kann ein Behältnis mit frischem Hopfen zur Verfügung gestellt werden, das mit grünem Hopfen gefüllt ist, der noch die typische Hopfenfarbe aufweist. Insbesondere bei der Sterilisierung von zerkleinerten Hopfendolden ist darauf zu achten, dass zwischen der Zerkleinerung und der Sterilisierung nur weniger als 5 Stunden vorzugsweise sogar weniger als 1 Stunde verstreicht.

Das Hopfenprodukt kann durch Tiefkühlung, Strahlensterilisation, Plasmasterilisation oder ähnliche Verfahren sterilisiert werden. Besonders vorteilhaft ist es, wenn das Hopfenprodukt mit Hitze sterilisiert wird. Insbesondere für die Sterilisierung mit Hitze ist es vorteilhaft, wenn das Hopfenprodukt eine bestimmte Feuchte aufweist. Daher ist es vorteilhaft, wenn die Dolden nach der Ernte nicht getrocknet werden und ihre Feuchte bei der Sterilisierung noch oberhalb von 60 % GG Wassergehalt liegt.

Je nach Sterilisierverfahren und Zustand des Hopfenproduktes kann es vorteilhaft sein, wenn dem Hopfenprodukt vor der Sterilisierung Flüssigkeit zugegeben wird. Als Flüssigkeit eignet sich beispielsweise Wasser. Insbesondere durch die Zugabe von Wasser entsteht ein definiertes Hopfenprodukt, dessen Feuchte und Inhaltsstoffe standardisiert werden können. Eine einfache Sterilisierung und eine benutzerfreundliche Weiterverarbeitung ergeben sich, wenn die Feuchte des Grünhopfens in der luftdichten Verpackung bei über 50 % GG Wassergehalt liegt. Es kann jedoch auch Bier oder Würze als Flüssigkeit zugegeben werden. Dies führt aber zu einer Beeinflussung des Hopfenaromas durch die Inhaltsstoffe der Würze. Durch die Flüssigkeitszugabe kann bereits bei der Sterilisierung eine Isomerisierung von Alpha-Säuren erreicht werden.

Durch die Zugabe von Flüssigkeit können die Inhaltsstoffe standardisiert werden, da höhere Konzentrationen durch die Flüssigkeitsgabe verdünnt werden können. Die Zugabe von Flüssigkeiten bewirkt auch eine Verbesserung des Wärmeüberganges und mit ihr kann das Produkt pumpfähig gemacht werden. Dabei wirkt eine Hopfendolde wie ein Schwamm, der viel Flüssigkeit aufnehmen kann.

Eine einfache Sterilisierung kann dadurch erzielt werden, dass das luftdichte Behältnis mindestens 30 Minuten bei über 60 °C gehalten wird. Diese Behandlung kann nach 12 bis 24 Stunden, wie beispielsweise am nächsten Tag wiederholt werden, um mit wenig Energieeintrag zu einem guten Ergebnis zu gelangen. Vorteilhaft ist es, wenn die Heißhaltezeit unter 1,3 Stunden und vorzugsweise unter 70 min liegt. Dadurch wird ein durch eine lange Heißhaltezeit bedingter Verlust von Ölen vermieden. Die Temperaturen liegen bevorzugt zwischen 90 und 130 °C.

Gute Ergebnisse bringt auch die Tyndallisation. Hierbei wird die Keimreduktion durch mehrmaliges Erhitzen erzielt. Im Gegensatz zur Sterilisation wird das zu tyndalliesierende Material nicht einer Temperatur von 121 °C für 20 Minuten sondern lediglich maximal 100 °C ausgesetzt. Bei einem nur als Beispiel genannten Protokoll wird die Probe Zunächst für 30 min auf 100 °C erhitzt, wodurch eine Abtötung vegetativer Bakterien- und Pilzzellen erfolgt und die Auskeimung hitzestabiler, stationärer Sporen durch Hitzeschock induziert wird. Eine anschließende Inkubation für 12 h bei 37 °C führt zur Auskeimung der stationären Sporen zu vegetativen Zellen. Diese können nun durch ein erneutes Erhitzen für 30 min auf 100 °C abgetötet werden. Das Ergebnis ist eine deutliche Keimreduktion. Durch mehrfaches Wiederholen dieses oder eines ähnlichen Erhitzen-Inkubieren-Zyklus kann die Anzahl der Keime weiter reduziert werden. Dadurch kann auch bei Kochtemperaturen um 100 °C ohne Druck eine ausreichende Sterilisierung erzielt werden. Je nach Wahl der Temperatur und Zeit kann das gleiche Hopfenprodukt nach der Sterilisierung unterschiedliche Eigenschaften aufweisen, die auf die Anforderungen beim Bierbrauen oder andere Einsatzgebiete abgestimmt sind.

Vorteilhaft ist es, wenn das luftdichte Behältnis autoklaviert wird. Dabei können Temperatur und Zeit derart abgestimmt werden, dass eine für die Dauer der Haltbarmachung notwendige Sterilisierintensität erreicht wird. Die Sterilisierung kann chargenweise im Autoklaven oder kontinuierlich im Durchlauferhitzer durchgeführt werden.

Besonders vorteilhaft ist eine Dampfsterilisation in Konservendosen, luftundurchlässigen Folien wie beispielsweise Mehrschichtfolien oder Glasverpackungen. Dabei wird das Sterilisier- oder Füllgut beispielsweise 20 Minuten bei 121 °C und 2 bar Druck in Wasserdampf erhitzt oder 5 Minuten auf 134 °C bei 3 bar. Zur Zerstörung von Prionen kann auch 18 Minuten auf 134 °C bei 3 bar erhitzt werden.

Vorteilhaft ist es, wenn das Hopfenprodukt während der Sterilisation geschüttelt wird oder durch Ultraschal in Schwingungen versetzt wird. Dadurch lässt sich die Sterilisationsdauer verkürzen.

Für den Einsatz in Brauereien ist Alphasäure neben den Aromaölen der wichtigste Bestandteil des Hopfens. Alphasäuren sind für die Bitterung des Bieres verantwortlich. Der Alphasäuregehalt im Hopfen liegt bei Bitterhopfen meist über 10 % und bei Aromahopfen unter 10 %. Da erst beim Kochprozess die Alphasäuren sich in Isoalphasäuren umwandeln, kann sich die Bittere erst durch das Hopfenkochen entfalten. Je länger der Hopfen gekocht wird, desto weiter schreitet die Isomerisierung der Alphasäuren voran und die Bitterstoffausbeute steigt. Daher wird in der Regel Bitterhopfen am Anfang des Würzekochprozesses zugegeben und am Ende des Würzekochprozesses wird Aromahopfen zugegeben.

Das Erfindungsgemäße Verfahren ermöglicht es, die Sterilisation so zu führen, dass bereits bei der Sterilisation mindestens 1 oder 2 %, vorzugsweise sogar mehr als 10 % der Alphasäuren in Isoalphasäuren isomerisieren. Dies ermöglicht es, die Bitterstoffausbeute nicht nur dadurch zu erhöhen, dass ein Trocknungsprozess vermieden wird, sondern auch dadurch, dass bereits bei der Sterilisierung ein Teil der Alphasäuren zu Isoalphasäuren isomerisieren.

Ein derart hergestelltes Hopfenprodukt kann in Folge seiner natürlichen Eigenschaften und seiner Haltbarkeit nach dem Würzekochen der Würze, dem Jungbier oder dem Bier zugegeben werden. Dabei können vollständige Dolden oder zerkleinerte Dolden eingesetzt werden und es kann beispielsweise auch erst beim Ausschank eine Dolde dem gezapften oder eingeschenkten Bier zugegeben werden, um dem Bier einen besonders aromatischen, herben Geschmack zu verleihen.

Das Hopfenprodukt kann jedoch auch im Bereich der Kosmetik als Maske, Hautauflage, Bad oder Tee eingesetzt werden. Es kann als Lebensmittelzusatz eingesetzt oder zu einem Lebensmittelzusatz weiterverarbeitet werden. Dies erleichtert es, die gesundheitsrelevanten, sedativen und konservierenden Wirkmechanismen des Hopfens in unterschiedlichen Einsatzbereichen zur Geltung zu bringen.

Das Hopfenprodukt kann auch in Alkohol oder Öl aufbewahrt werden, um lange haltbar zu sein und um den bitteren, aromatischen Geschmack zu bewahren.

Bei einem ersten Ausführungsbeispiel wurde zunächst in einem wasserdichten Beutel zerkleinerter frischer Bitterhopfen in einen Topf mit heißem Wasser bei Überdruck bei 110 °C 55 Minuten heiß gehalten. Danach wurden 3,5 % alpha-Säure, 1,4 % beta-Säure und 1,0 % iso-alpha-Säure gemessen. Für die Messung der alpha-Säure und der beta-Säure wurde die Methode EBC 7.7 verwendet und für die iso-alpha-Säure wurde eine Prüfmethode nach EBC im nicht akkreditierten Bereich verwendet.

Als zweite Probe wurde der Bitterhopfen in einem Glasbehälter 90 Minuten bei 80 °C heiß gehalten. Danach lag der Gehalt an alpha-Säure bei 4,2 %, der der beta-Säure bei 1,6 % und der der iso-alpha-Säure bei 0,7 %.

In einer dritten Probe wurde wieder ein Glasbehälter mit Bitterhopfen 70 Minuten bei 70 °C heiß gehalten und es wurden danach 4,1 % alpha-Säure, 1,4 % beta-Säure und 0,1 % iso-alpha-Säure gemessen.

Danach wurden Aromahopfen entsprechend behandelt. Dabei wurde eine Probe in einem Beutel 90 Minuten bei 90 °C heiß gehalten. Dies führte zu 1,6 % alpha-Säure, 1,3 % beta-Säure und 0,4 % iso-alpha-Säure.

Eine Probe in einem Glas führte nach einer Heißhaltezeit von 90 Minuten bei 90 °C zu 0,5 % alpha-Säure, 1,1 % beta-Säure und 0,3 % iso-alpha-Säure.

Daraus ist bereits abzulesen, dass eine hohe Temperatur die Isomerisierung begünstigt. Bereits durch diese beiden Parameter kann auf einfache Art und Weise bei der Sterilisierung auf die Produkteigenschaften eingewirkt werden.

Das erfindungsgemäße Verfahren führt zu einem Hopfenprodukt, das steril ist und dadurch für das Hopfenstopfen aus mikrobiologischer Sicht besonders gut geeignet ist. Die spezielle kurze thermische Behandlung führt zu einem frischen Hopfenprodukt mit einem entsprechenden Aroma. Während bei einer langen Trocknungsbehandlung die Weichharze zu Hartharzen werden, hat das erfindungsgemäße Hopfenprodukt besonders viele Weichharze. Ein besonderer Vorteil liegt darin, dass die Hopfenöle und Polyphenole erhalten bleiben und dadurch die spezielle Charakteristik einer Hopfensorte durch die Sterilisation nicht beeinträchtigt wird.

Je nach Verwendungszweck kann der Hopfen besonders stark zerkleinert werden, um im Whirlpool ausgetragen zu werden oder es können sogar ganze Dolden verwendet werden, die mit einem Hopfenseiher entfernt werden.

Während der Sterilisation weichen die Lupolindrüsen auf und der überwiegende Anteil an Weichharzen führt zu einer besonderen Löslichkeit.

Während der Sterilisierung kann beispielsweise durch Zugabe von Würze oder Wasser der pH-Wert so eingestellt werden, dass eine gewünschte Isomerisierung der Hopfensäuren herbeigeführt wird. Die Hopfengabe wird durch das nasse Produkt erleichtert, da es bei der Zugabe zu Wasser oder Würze schnell einsinkt und nur eine kurze Kontaktzeit benötigt wird, um die Säure und die Öle aus den Lupolindrüsen in die Flüssigkeit zu überführen. Dadurch verkürzt sich die zum Lösen der Harze benötigte Kochzeit und auch beim Hopfenstopfen verkürzt sich die Zeit zur Überführung des Hopfenaromas in das Produkt.

Während vorisomerisierte Hopfenprodukte in der Regel Salze wie Magnesiumoxid oder Zusatzstoffe wie Hexanmethanol oder Methylenchlorid aufweisen, kann mit dem erfindungsgemäßen Verfahren ein vorisomerisiertes Produkt ohne derartige Zusätze hergestellt werden.

Zur Isomerisierung werden auch Warmhaltephasen bei 50 °C über ein bis zwei Wochen vorgeschlagen, um sogenannte iso-alpha-Pellets zu erhalten. Auch diese aufwändige Behandlungsart erübrigt sich, wenn das erfindungsgemäße Sterilisationsverfahren verwendet wird.

Das entstandene Hopfenprodukt kann auf einfache Art und Weise durch die Auswahl der Flüssigkeit (Würze, Wasser), der Heißhaltezeit und der Temperatur sowie das Material der Verpackung individuell an spezielle Anforderungen angepasst werden. Je nach Auswahl der Verpackung kann die Lagerungsdauer von Monaten auf Jahre ausgedehnt werden.

Untersuchungen haben gezeigt, dass bei der Sterilisation Polyphenole, Harze, Öle und Gerbstoffe voll erhalten bleiben. Die Bittersäuren oxidieren dabei zum Teil zu Hartharz-Komponenten.

## Patentansprüche

1. Verfahren zum Behandeln eines Hopfenproduktes, das eine Feuchte von mehr als 18 % GG Wassergehalt aufweist, bei dem das Hopfenprodukt sterilisiert und in einer luftdichten Verpackung gelagert wird, ***dadurch gekennzeichnet*, *dass*** das Hopfenprodukt als ungetrockneter, erntefrischer Grünhopfen in einem luftdichten Behältnis sterilisiert wird.

2. Verfahren nach Anspruch 1, ***dadurch gekennzeichnet*, *dass*** das Hopfenprodukt Hopfendolden sind.

3. Verfahren nach Anspruch 1, ***dadurch gekennzeichnet*, *dass*** das Hopfenprodukt zerkleinerte Hopfendolden sind.

4. Verfahren nach einem der vorhergehenden Ansprüche, ***dadurch gekennzeichnet, dass*** das Hopfenprodukt mit Hitze sterilisiert wird.

5. Verfahren nach einem der vorhergehenden Ansprüche, ***dadurch gekennzeichnet*, *dass*** das die Feuchte des zu sterilisierenden Hopfenproduktes bei über 60 % GG Wassergehalt liegt.

6. Verfahren nach einem der vorhergehenden Ansprüche, ***dadurch gekennzeichnet, dass*** dem Hopfenprodukt vor der Sterilisierung Flüssigkeit zugegeben wird.

7. Verfahren nach einem der vorhergehenden Ansprüche, ***dadurch gekennzeichnet, dass*** das die Feuchte des Grünhopfens in der luftdichten Verpackung bei über 60 % GG Wassergehalt liegt.

8. Verfahren nach einem der vorhergehenden Ansprüche, ***dadurch gekennzeichnet*, *dass*** das luftdichte Behältnis mindestens 15 min bei über 60 °C gehalten wird.

9. Verfahren nach einem der vorhergehenden Ansprüche, ***dadurch gekennzeichnet*, *dass*** das luftdichte Behältnis autoklaviert wird.

10. Verfahren nach einem der vorhergehenden Ansprüche, ***dadurch gekennzeichnet*, *dass*** bei der Sterilisation mindestens 1 %, vorzugsweise sogar mehr als 10 % der Alphasäuren in Iso-Alphasäuren isomerisieren.

11. Verwendung eines nach einem der vorhergehenden Ansprüche hergestellten Hopfenproduktes, ***dadurch gekennzeichnet, dass*** es vor, während oder nach dem Würzekochen der Würze, dem Jungbier oder dem Bier zugegeben wird.

## Claims

1. A method for treating a hop product, which exhibits a moisture in excess of 18% GG water content, in which the hop product is sterilized and stored in an airtight packaging, ***characterized in that*** the hop product is sterilized as an undried, freshly harvested green hop in an airtight container.

2. The method according to claim 1, ***characterized in that*** the hop product consists of hop umbels.

3. The method according to claim 1, ***characterized in that*** the hop product consists of comminuted hop umbels.

4. The method according to one of the preceding claims, ***characterized in that*** the hop product is sterilized with heat.

5. The method according to one of the preceding claims, ***characterized in that*** the moisture of the hop product to be sterilized measures in excess of 60% GG water content.

6. The method according to one of the preceding claims, ***characterized in that*** liquid is added to the hop product before sterilization.

7. The method according to one of the preceding claims, ***characterized in that*** the moisture of the green hops in the airtight packaging measures in excess of 60 % GG water content.

8. The method according to one of the preceding claims, ***characterized in that*** the airtight container is kept at in excess of 60°C for at least 15 minutes.

9. The method according to one of the preceding claims, ***characterized in that*** the airtight container is autoclaved.

10. The method according to one of the preceding claims, ***characterized in that*** at least 1%, preferably even more than 10%, of the alpha acids isomerize into iso-alpha acids during sterilization.

11. Use of a hop product manufactured according to one of the preceding claims, ***characterized in that*** it is added to the young beer or beer before, while or after boiling he wort.

## Revendications

1. Procédé destiné à traiter un produit du houblon qui présente une humidité supérieure à 18 % en teneur d'eau TG, lors duquel on stérilise et on stocke le produit du houblon dans un emballage étanche à l'air, ***caractérisé en ce qu*'on** stérilise le produit du houblon sous la forme de houblon vert fraîchement récolté, non séché dans un contenant étanche à l'air.

2. Procédé selon la revendication 1, ***caractérisé en ce que*** le produit du houblon est constitué de cônes de houblon.

3. Procédé selon la revendication 1, ***caractérisé en ce que*** le produit du houblon est constitué de cônes de houblon concassés.

4. Procédé selon l'une quelconque des revendications précédentes, ***caractérisé en ce qu*'on** stérilise le produit du houblon avec de la chaleur.

5. Procédé selon l'une quelconque des revendications précédentes, ***caractérisé en ce que*** l'humidité du produit du houblon qui doit être stérilisé est supérieure à 60 % en teneur d'eau TG.

6. Procédé selon l'une quelconque des revendications précédentes, ***caractérisé en ce* qu**'avant la stérilisation, on ajoute un liquide au produit du houblon.

7. Procédé selon l'une quelconque des revendications précédentes, ***caractérisé en ce que*** l'humidité du houblon vert dans l'emballage étanche à l'air est supérieure à 60 % en teneur d'eau TG.

8. Procédé selon l'une quelconque des revendications précédentes, ***caractérisé en ce qu**'*on maintient le contenant étanche à l'air au moins pendant 15 minutes à plus de 60 °C.

9. Procédé selon l'une quelconque des revendications précédentes, ***caractérisé en ce qu***'on passe à l'autoclave le contenant étanche à l'air.

10. Procédé selon l'une quelconque des revendications précédentes, ***caractérisé en ce que*** lors de la stérilisation, au moins 1 %, de préférence même plus de 10 % des acides alpha s'isomérisent en acides iso-alpha.

11. Utilisation d'un produit du houblon fabriqué selon l'une quelconque des revendications précédentes, ***caractérisé en ce qu***'il est ajouté à la jeune bière ou à la bière avant, pendant ou après l'ébullition du moût.
